(19) Europäisches Patentamt
European Patent Office
Office européen des brevets

(11) **EP 4 148 265 A1**

(12) **EUROPEAN PATENT APPLICATION**

(43) Date of publication:
**15.03.2023 Bulletin 2023/11**

(21) Application number: **22192760.1**

(22) Date of filing: **30.08.2022**

(51) International Patent Classification (IPC):
$F02K\ 5/00^{(2006.01)}$  $F02K\ 3/06^{(2006.01)}$
$F02C\ 6/14^{(2006.01)}$  $B64D\ 27/24^{(2006.01)}$

(52) Cooperative Patent Classification (CPC):
**F02K 3/06; B64D 27/24; F02C 6/14; F02K 5/00;**
F05D 2220/76; F05D 2260/42

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.09.2021 GB 202112775
22.11.2021 GB 202116765**

(71) Applicant: **Rolls-Royce plc
London N1 9FX (GB)**

(72) Inventors:
• **Davies, Paul
Derby, DE24 8BJ (GB)**
• **Moore, Gareth
Derby, DE24 8BJ (GB)**
• **Husband, Stephen
Derby, DE24 8BJ (GB)**
• **Trainer, David
Derby, DE24 8BJ (GB)**
• **Scothern, David
Derby, DE24 8BJ (GB)**
• **George, Luke
Derby, DE24 8BJ (GB)**

(74) Representative: **Rolls-Royce plc
Intellectual Property Dept SinA-48
PO Box 31
Derby DE24 8BJ (GB)**

(54) **AN IMPROVED GAS TURBINE ENGINE**

(57)  A gas turbine engine for an aircraft comprises, in axial flow sequence, a compressor module, a combustor module, and a turbine module. The gas turbine engine further comprises a first electric machine that is rotationally connected to the turbine module, and an electrical energy storage unit. The gas turbine engine is configured to generate a maximum dry thrust T (N). The first electric machine is configured to generate a maximum electrical power $P_{EM1}$ (W). The electrical energy storage unit has an energy storage capacity E (Wh), a maximum charge rate C ($h^{-1}$), and a maximum discharge rate D ($h^{-1}$). The electrical energy storage unit is configured to store electrical energy that may be generated by the first electric machine.

*FIG. 3*

**Description**

*Field of the Disclosure*

The present disclosure relates to an improved gas turbine engine and particularly, but not exclusively, to an improved turbofan gas turbine engine.

*Background to the Disclosure*

A conventional gas turbine engine, such as a turboprop or turbofan gas turbine engine, uses heat exchangers to cool a variety of fluids including *inter alia* air, fuel and oil.

In a typical turbofan engine, such heat exchangers use bypass air or an air offtake from the compressor as the cooling medium. The heat exchanger itself may be positioned in the bypass duct or externally to the engine with the corresponding ducting.

The use of bypass air or a compressor offtake stream as the cooling medium in a heat exchanger will adversely affect the performance of the engine, for example by reducing specific thrust or increasing specific fuel consumption. Alternatively, or additionally, such offtakes can adversely affect engine performance, for example by reducing surge margin.

In a further alternative conventional arrangement, an airflow to provide the cooling medium in example, in an airframe application the airflow providing the cooling medium may be drawn from an air intake or duct separate from the engine.

As used herein, a range "from value X to value Y" or "between value X and value Y", or the likes, denotes an inclusive range; including the bounding values of X and Y. As used herein, the term "axial plane" denotes a plane extending along the length of an engine, parallel to and containing an axial centreline of the engine, and the term "radial plane" denotes a plane extending perpendicular to the axial centreline of the engine, so including all radial lines at the axial position of the radial plane. Axial planes may also be referred to as longitudinal planes, as they extend along the length of the engine. A radial distance or an axial distance is therefore a distance in a radial or axial plane, respectively.

*Statements of Disclosure*

According to an aspect of the present disclosure, there is provided a gas turbine engine for an aircraft, the gas turbine engine comprising, in axial flow sequence, a compressor module, a combustor module, and a turbine module, the gas turbine engine further comprising a first electric machine being rotationally connected to the turbine module, and an electrical energy storage unit, and

wherein the gas turbine engine is configured to generate a maximum dry thrust T (N), the first electric machine is configured to generate a maximum electrical power $P_{EM1}$ (W), the electrical energy storage unit has an energy storage capacity E (Wh), the electrical energy storage unit has a maximum charge rate C ($h^{-1}$), the electrical energy storage unit has a maximum discharge rate D ($h^{-1}$),and the electrical energy storage unit is configured to store electrical energy that may be generated by the first electrical machine.

The gas turbine engine of the present disclosure has an embedded electric machine that is capable of generating a level of electrical power that forms a higher proportion of the shaft power generated by the engine than in the case for any conventional gas turbine engine. The maximum shaft power will be generated when the gas turbine engine is operating at maximum dry thrust at SLS[1] conditions.

In the context of the present disclosure, the gas turbine engine is considered to comprise at least the compressor module, the combustor module, the turbine module, and the exhaust module, together with the first electric machine.

The first electric machine is also capable of operating in a motoring mode in which it can rotationally drive the turbine module. In this way the first electric machine can actively modify the rotational speed characteristic of the turbine module in response to a user-defined requirement. In other words, the first electric machine can be

[1] In the present example, the SLS (Sea Level Static) conditions are considered to also be at ISA Standard Atmosphere conditions (1,013.25 mb / 15°C). used, for example, to modify the working line of the gas turbine engine, or to adjust the surge margin at a particular operating point of the gas turbine engine.

An additional feature of the gas turbine engine of the present disclosure is the ability to restart the engine by using the first electric machine to rotate the turbine module. In this way, the engine may be restarted either while the aircraft is on the ground, for example before take-off, or in-flight, for example following an unscheduled engine stoppage.

The first electric machine is connected directly to the HP (high-pressure) shaft connecting the high-pressure compressor to the high-pressure turbine. This enables the first electric machine to be used to start the gas turbine engine, which in turn allows the separate starter motor and associated drive mechanism to be deleted. This makes the gas turbine engine of the present disclosure simpler than conventional gas turbine engines.

The electrical energy storage unit enables electrical energy generated by either or both of the first and second electric machines to be stored in readiness for future use. For example, this stored electrical energy can be used to power either or both of the first and second electric machines in order to modify the operating characteristics of the gas turbine engine.

Alternatively, the stored electrical energy could be used to drive the first electric machine in order to start the gas turbine engine. This starting process may include both ground engine starting and in-flight engine starting.

Optionally, the maximum electrical power is the maximum power output of the first electric machine, $P_{EM1}$, and a ratio L is defined as:

$$L = \frac{(\text{Energy storage capacity}) * (\text{Maximum electrical power generated})}{(\text{Maximum Dry Thrust})}$$

where L is in a range of between 20,000 and 300,000.

The parameter ratio L provides a measure of the size of the electrical power generation capacity and the electrical energy storage capacity of the gas turbine engine per unit maximum dry thrust.

In one arrangement, the gas turbine engine is installed into an aircraft with the electrical energy storage unit and first electric machine providing electrical power to ancillary systems on the aircraft. This means that no supplementary auxiliary power unit is required to provide power to these ancillary systems during use of the aircraft. This makes the gas turbine engine more easily integrated into the aircraft by a user.

In alternative arrangements of the gas turbine engine, the parameter ratio L may be in the range of between 50,000 and 300,000, or in the range of between 100,000 and 300,000, or in the range of between 150,000 and 300,000,

Optionally, the maximum electrical power is the maximum power output of the first electric machine, $P_{EM1}$, and a ratio M is defined as:

$$M = \frac{(\text{Maximum charge rate}) * (\text{Maximum electrical power generated})}{(\text{Maximum Dry Thrust})}$$

where M is in a range of between 20 and 400.

The parameter ratio M provides a measure of the capability of the gas turbine engine both to generate a relatively large quantity of electrical power and to store the electrical power in the electrical energy storage unit at a high storage rate. In other words, a high value for M indicates a gas turbine engine that is capable of generating a large quantity of electrical energy and storing this electrical energy quickly for later use.

In alternative arrangements of the gas turbine engine, the parameter ratio M may be in the range of between 20 and 100, or in the range of between 50 and 200, or in the range of between 50 and 200,

Optionally, the maximum electrical power is the maximum power output of the first electric machine, $P_{EM1}$, and a ratio N is defined as:

$$N = \frac{(\text{Maximum Discharge Rate}) * (\text{Maximum electrical power generated})}{(\text{Maximum Dry Thrust})}$$

where N is in a range of between 40 and 400.

The parameter ratio N provides a measure of the capability of the gas turbine engine both to generate a relatively large quantity of electrical power and to supply stored electrical power from the electrical energy storage unit at a high storage rate. In other words, a high value for N indicates a gas turbine engine that is capable of generating a large quantity of electrical energy and supplying this electrical energy quickly for use in, for example, an aircraft to which the gas turbine engine is fitted.

In alternative arrangements of the gas turbine engine, the parameter ratio N may be in the range of between 40 and 200, or in the range of between 40 and 100, or in the range of between 100 and 400,

Optionally, the gas turbine engine is a turbofan engine comprising, in axial flow sequence, a fan assembly, a compressor module, a combustor module, and a turbine module,

Optionally, the gas turbine engine further comprises a second electric machine rotationally connected to the fan assembly, the second electric machine being configured to generate a maximum electrical power $P_{EM2}$ (watts).

The second electric machine being connected to the fan assembly is thus driven by the LP (low-pressure) shaft that connects the fan to the low-pressure turbine. The second electric machine therefore rotates at a lower rotational speed than the first electric machine that, as outlined above, is driven by the HP (high-pressure) shaft.

In the present arrangement, the second electric machine is rotationally coupled to the fan assembly and is positioned upstream of the fan. The use of a second electric machine that is rotationally connected to the fan assembly further increases the electric power generation capability of the system.

In an alternative arrangement, the second electric machine may be positioned downstream of the low-pressure turbine while still being driven by the LP shaft. In this alternative arrangement, the second electric machine may be housed in a tail cone downstream of the exhaust assembly.

A further alternative arrangement involves the second electric machine being positioned radially outwardly of gas turbine engine with a drive arrangement extending out from the LP shaft.

The second electric machine can also operate in a motoring mode in which it can rotationally drive the fan assembly. This enables the second electric machine to actively modify the rotational speed characteristic of the fan assembly in response to a user-defined requirement. For example, such modification of the rotational speed characteristic of the fan assembly may be used to ameliorate or eliminate fan flutter.

Optionally, the maximum electrical power is the combined maximum power output of the first electric machine, $P_{EM1}$, and the second electric machine, $P_{EM2}$, and the ratio L is in a range of between 30,000 and 600,000.

The inclusion of a second electric machine in the gas turbine engine enables the generation of a higher maximum electrical power output. This in turn makes the gas turbine engine capable of powering, for example, additional or more power-hungry ancillary equipment, which makes the gas turbine engine more useful and advantageous to a user.

In alternative arrangements of the gas turbine engine with first and second electric machines, the parameter ratio L may be in the range of between 50,000 and 300,000, or in the range of between 100,000 and 300,000, or in the range of between 150,000 and 300,000,

Optionally, the maximum electrical power is the combined maximum power output of the first electric machine, $P_{EM1}$, and the second electric machine, $P_{EM2}$, and the ratio M is in a range of between 30 and 800.

The inclusion of a second electric machine in the gas turbine engine enables the generation of a higher maximum electrical power output. This in turn makes the gas turbine engine capable of powering, for example, additional or more power-hungry ancillary equipment, which makes the gas turbine engine more useful and advantageous to a user.

In alternative arrangements of the gas turbine engine with first and second electric machines, the parameter ratio M may be in the range of between 20 and 100, or in the range of between 50 and 200, or in the range of between 50 and 200,

Optionally, the maximum electrical power is the combined maximum power output of the first electric machine, $P_{EM1}$, and the second electric machine, $P_{EM2}$, and the ratio N is in a range of between 70 and 800.

The inclusion of a second electric machine in the gas turbine engine enables the generation of a higher maximum electrical power output. This in turn makes the gas turbine engine capable of powering, for example, additional or more power-hungry ancillary equipment, which makes the gas turbine engine more useful and advantageous to a user.

In alternative arrangements of the gas turbine engine with first and second electric machines, the parameter ratio N may be in the range of between 40 and 200, or in the range of between 40 and 100, or in the range of between 100 and 400,

Optionally, the fan diameter $D_{FAN}$ is within the range of 0.3m to 2.0m, preferably within the range 0.4m to 1.5m, and more preferably in the range of 0.7m to 1.0m.

In one embodiment of the disclosure, the fan diameter is 0.9m.

Consequently, for the same heat energy loading rejected to the air flow through the heat exchanger, the loss in propulsive efficiency of the turbofan engine is proportionately smaller for a large diameter (for example, approximately 1.5 to 2.0m in diameter) turbofan engine than for a small diameter turbofan engine.

The fan tip diameter, measured across a centreline of the engine and between an outermost tip of opposing fan blades at their leading edge, may be in the range from 95 cm to 200 cm, for example in the range from 110 cm to 150 cm, or alternatively in the range from 155 cm to 200 cm. The fan tip diameter may be greater than any of: 110 cm, 115 cm, 120 cm, 125 cm, 130 cm, 135cm, 140 cm, 145 cm, 150 cm, 155 cm, 160 cm, 165 cm, 170 cm, 175 cm, 180 cm, 185 cm, 190 cm or 195 cm. The fan tip diameter may be around 110 cm, 115 cm, 120 cm, 125 cm, 130 cm, 135cm, 140 cm, 145 cm, 150 cm, 155 cm, 160 cm, 165 cm, 170 cm, 175 cm, 180 cm, 185 cm, 190 cm or 195 cm. The fan tip diameter may be greater than 160 cm.

The fan tip diameter may be in the range from 95 cm to 150 cm, optionally in the range from 110 cm to 150 cm, optionally in the range of from 110 cm to 145 cm, and further optionally in the range from 120 cm to 140 cm.

The fan tip diameter may be in the range from 155 cm to 200 cm, optionally in the range from 160 cm to 200 cm, and further optionally in the range from 165 cm to 190 cm.

Optionally, the fan assembly has two or more fan stages, at least one of the fan stages comprising a plurality of fan blades defining the fan diameter $D_{FAN}$.

Providing the fan assembly with two or more fan stages enables the pressure ratio of the fan assembly to be increased without having to increase a fan diameter.

Optionally, the turbofan gas turbine engine further comprises an outer casing, the outer casing enclosing the sequential arrangement of fan assembly, compressor module, and turbine module, an annular bypass duct being defined between the outer casing and the sequential arrangement of compressor module and turbine module, a bypass ratio being defined as a ratio of a mass air flow rate through the bypass duct to a mass air flow rate through the sequential arrangement of compressor module and turbine module, and wherein the bypass ratio is less than 4.0.

A turbofan engine having a bypass ratio (BPR) of less than approximately 4.0 will have a generally smaller bypass duct (the annular duct surrounding the core gas turbine engine) than a turbofan engine having a BPR greater than approximately 4.0. For a turbofan engine with a BPR greater than, say, 4.0, the correspondingly larger bypass duct volume provides more scope for positioning a heat exchanger within the bypass duct than would be the case for a low BPR turbofan engine.

Optionally, the gas turbine engine further comprises a heat exchanger module, the heat exchanger module being in fluid communication with the gas turbine engine by an inlet duct, and the heat exchanger module comprises a central hub and a plurality of heat transfer elements extending radially outwardly from the central hub and spaced in a circumferential array, for transfer of heat energy from a first fluid contained within the heat transfer elements to an inlet airflow passing over a surface of the heat transfer elements prior to entry of the airflow into an inlet to the gas turbine engine.

In the present arrangement, the waste heat energy generated by the gas turbine engine can be rejected to the inlet airflow prior to it entering the gas turbine engine by means of the heat exchange module. The placement of the heat exchange module upstream of the inlet to the gas turbine engine makes the gas turbine engine assembly more convenient and easier for a user to package into an airframe.

Rejecting the waste heat energy to the inlet airflow eliminates the need for separately mounted heat exchangers and the associated supplementary cooling airflow ducts, which must be packaged on the airframe. This in turn makes the airframe more aerodynamically efficient.

Optionally, the electrical energy storage unit is a battery.

In one arrangement, the electrical energy storage unit is battery.

Optionally, the electrical energy storage unit is a capacitor.

Using a capacitor as the electrical energy storage unit provides for a higher charge and discharge rate than, for example, a conventional lithium battery. However, a capacitor storage unit may be more expensive and more difficult to package than a conventional battery.

According to a further aspect of the present disclosure, there is provided an aircraft comprising a gas turbine engine according to the first aspect.

The advantages outlined above, and in particular the advantage of a shorter engine makes the engine assembly more compact and so more readily packaged in an aircraft body.

According to a further aspect of the present disclosure, there is provided a method of operating an aircraft comprising the turbofan gas turbine engine according to the first aspect, the method comprising taking off from a runway, wherein the maximum rotational speed of the turbine during take-off is in the range of from 16000 rpm to 25000 rpm.

According to a further aspect of the present disclosure, there is provided a method of operating a gas turbine engine for an aircraft, the method comprising the steps of:

(i) providing a gas turbine engine, the gas turbine engine comprising, in axial flow sequence, a compressor module, a combustor module, and a turbine module;
(ii) providing a first electric machine rotationally connected to the turbine module;
(iii) providing an electrical energy storage unit, the electrical energy storage unit being configured to store electrical energy that is generated by the first electric machine, the electrical energy storage unit has an energy storge capacity E (Wh), the electrical energy storage unit has a maximum charge rate C ($h^{-1}$), the electrical energy storage unit has a maximum discharge rate D ($h^{-1}$); and
(iv) operating the gas turbine engine at a full power condition in which the gas turbine engine generates a maximum dry thrust T (N), the first electric machine generates a maximum electrical power $P_{EM1}$ (W), and wherein a ratio L of:

$$L = \frac{(\text{Energy storage capacity}) * (\text{Maximum electrical power generated})}{(\text{Maximum Dry Thrust})}$$

is in a range of between 20,000 and 300,000.

The parameter ratio L provides a measure of the size of the electrical power generation capacity and the electrical energy storage capacity of the gas turbine engine per unit maximum dry thrust.

In one arrangement, the gas turbine engine is installed into an aircraft with the electrical energy storage unit and first electric machine providing electrical power to ancillary systems on the aircraft. This means that no supplementary auxiliary power unit is required to provide power to these ancillary systems during use of the aircraft. This makes the gas turbine engine more easily integrated into the aircraft by a user.

In alternative arrangements of the gas turbine engine, the parameter ratio L may be in the range of between 50,000 and 300,000, or in the range of between 100,000 and 300,000, or in the range of between 150,000 and 300,000,

Optionally, step (iv) comprises the step of:

(iv)" operating the gas turbine engine at a full power condition in which the gas turbine engine generates a maximum dry thrust T (N), the first electric machine generates a maximum electrical power $P_{EM1}$ (W), and wherein a ratio M of:

$$M = \frac{(\text{Maximum charge rate}) * (\text{Maximum electrical power generated})}{(\text{Maximum Dry Thrust})}$$

is in a range of between 20 and 400.

The parameter ratio M provides a measure of the capability of the gas turbine engine both to generate a relatively large quantity of electrical power and to store the electrical power in the electrical energy storage unit at a high storage rate. In other words, a high value for M indicates a gas turbine engine that is capable of generating a large quantity of electrical energy and storing this electrical energy quickly for later use.

In alternative arrangements of the gas turbine engine, the parameter ratio M may be in the range of between 20 and 100, or in the range of between 50 and 200, or in the range of between 50 and 200,

Optionally, step (iv) comprises the step of:

(iv)‴ operating the gas turbine engine at a full power condition in which the gas turbine engine generates a maximum dry thrust T (N), the first electric machine generates a maximum electrical power $P_{EM1}$ (W), and wherein a ratio N of:

$$N = \frac{(D) * (\text{Maximum electrical power generated})}{(\text{Maximum Dry Thrust})}$$

is in a range of between 40 and 400.

The parameter ratio N provides a measure of the capability of the gas turbine engine both to generate a relatively large quantity of electrical power and to supply stored electrical power from the electrical energy storage unit at a high storage rate. In other words, a high value for N indicates a gas turbine engine that is capable of generating a large quantity of electrical energy and supplying this electrical energy quickly for use in, for example, an aircraft to which the gas turbine engine is fitted.

In alternative arrangements of the gas turbine engine, the parameter ratio N may be in the range of between 40 and 200, or in the range of between 40 and 100, or in the range of between 100 and 400,

Optionally, step (i) comprises the step of:

(i)' providing a turbofan gas turbine engine, the gas turbine engine comprising, in axial flow sequence, a fan assembly, a compressor module, a combustor module, and a turbine module.

According to a further aspect of the present disclosure, there is provided a gas turbine engine for an aircraft, the gas turbine engine comprising, in axial flow sequence, a heat exchanger module, and a core engine, the core engine comprising, in axial flow sequence, an intermediate-pressure compressor, a high-pressure compressor, a high pressure turbine, and a low-pressure turbine, the high-pressure compressor being rotationally connected to the high-pressure turbine by a first shaft, the intermediate-pressure compressor being rotationally connected to the low-pressure turbine by a second shaft, the heat exchanger module being in fluid communication with the core engine by an inlet duct, the heat exchanger module comprising a central hub and a plurality of heat transfer elements extending radially outwardly from the central hub and spaced in a circumferential array, for transfer of heat energy from a first fluid contained within the heat transfer elements to an inlet airflow passing over a surface of the heat transfer elements prior to entry of the airflow into an inlet to the core engine, and

wherein the gas turbine engine further comprises a first electric machine and a second electric machine, the first electric machine is rotationally connected to the first shaft, the first electric machine is positioned downstream of the heat exchanger module, and the second electric machine is rotationally connected to the second shaft.

The gas turbine engine of the present disclosure includes integrated electric power generation from the first and second electric machines, together with the capability to reject waste heat energy into the inlet air entering the gas turbine engine. This provides a user with an integrated power system that can be simply installed into an aircraft machine body without the need for additional electrical power generation or heat dissipation capability. This makes the gas turbine engine more convenient and both more space-efficient and weight-efficient than prior art arrangements that provide the same functionality.

Optionally, the second electric machine is accommodated within the central hub.

The central hub is required for aerodynamic reasons to smooth an inlet airflow into the compressor module. The central hub also provides mounting points for the radially innermost ends of the heat transfer elements. The interior volume of the central hub is therefore likely to be substantially unused.

Positioning the second electric machine within the central hub of the heat exchanger module therefore efficiently uses the interior volume of the central hub. This location also allows the second electric machine to be simply rotationally driven from an upstream end of the second shaft.

Optionally, the second electric machine is positioned axially downstream of the low-pressure turbine.

In an alternative arrangement, the second electric machine is positioned in a tail cone of the core engine. In this arrangement, the second electric machine is rotationally driven by a downstream end of the second shaft. In the same manner as outlined above for the central hub, the tail cone volume is generally unused.

Consequently, the second electric machine may be located in tail cone with little space conflict to other engine components. Furthermore, being positioned directly downstream of the low-pressure turbine assembly, the second electric machine may easily be rotationally connected to and driven by the second shaft.

Optionally, the first electric machine is positioned axially upstream of the core engine.

Positioning the first electric machine axially upstream of the core engine means that the outer diameter of the core engine does not have to be increased to enclose the first electric machine. Thus, the dimensions of the core engine can be substantially unchanged by the addition of the first electric machine.

The skilled person will appreciate that a feature described above in relation to any one of the aspects may be applied, *mutatis mutandis,* to any other aspect of the invention. For example, in various embodiments any two or more of the conditions for ratios as defined above, and optionally all specified ratio ranges, may apply to any given aspect or embodiment. All aspects may apply to an engine of some embodiments. Furthermore, any feature described below may apply to any aspect and/or may apply in combination with any one of the claims.

As noted elsewhere herein, the present disclosure may relate to a turbofan gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core. The fan may comprise any number of stages, for example multiple stages. Each fan stage may comprise a row of fan blades and a row of stator vanes. The stator vanes may be variable stator vanes (in that their angle of incidence may be variable).

The turbofan gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

In any turbofan gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of compressor stages, for example multiple stages. Each compressor stage may comprise a row of rotor blades and a row of stator vanes. The stator vanes may be variable stator vanes (in that their angle of incidence may be variable). The row of rotor blades and the row of stator vanes may be axially offset from each other.

The or each turbine (for example the first turbine and second turbine as described above) may comprise any number of turbine stages, for example multiple stages. Each turbine stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.40, 0.39, 0.38, 0.37, 0.36, 0.35, 0.34, 0.33, 0.32, 0.31, 0.30, 0.29, 0.28, 0.27 or 0.26. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The diameter of the fan may be measured across the engine centreline and between the tips of opposing fan blades at their leading edge. The fan diameter may be greater than (or on the order of) any of: 50 cm, 60 cm, 70 cm (around 27.5 inches), 80 cm (around 31.5 inches), 90 cm, 100 cm (around 39 inches), 110 cm (around 43 inches), 120 cm (around 47 inches), 130 cm (around 51 inches), 140 cm (around 55 inches), 150 cm (around 59 inches), or 160 cm (around 63 inches). The fan diameter may be in an inclusive range bounded by any two of the values in the previous sentence (i.e. the values may form upper or lower bounds), for example in the range of from 50 cm to 70 cm or 90 cm to 130 cm.

The fan face area may be calculated as $\pi$ multiplied by the square of the fan tip radius.

The rotational speed of the fan may vary in use. Generally, the rotational speed is lower for fans with a higher diameter. Purely by way of non-limitative example, the rotational speed of the fan at cruise conditions may be less than 10000 rpm, for example less than 9000 rpm. Purely by way of further non-limitative example, the rotational speed of the fan at cruise conditions for an engine having a fan diameter in the range of from 50 cm to 90 cm (for example 60 cm to 80 cm or 65 cm to 75 cm) may be in the range of from 7000 rpm to 22000 rpm, for example in the range of from 7000 rpm to 16000 rpm, for example in the range of from 7500 rpm to 14000 rpm. Purely by way of further non-limitative example, the rotational speed of the fan at cruise conditions for an engine having a fan diameter in the range of from 90 cm to 150 cm may be in the range of from 4500 rpm to 12500 rpm, for example in the range of from 4500 rpm to 10000 rpm, for example in the range of from 6000 rpm to 10000 rpm.

In use of the turbofan gas turbine engine, the fan (with associated fan blades) rotates about a rotational axis. This rotation results in the tip of the fan blade moving with a velocity $U_{tip}$. The work done by the fan blades 13 on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at cruise conditions may be greater than (or on the order of) any of: 0.22, 0.23, 0.24, 0.25, 0.26, 0.27, 0.28, 0.29, 0.30, 0.31, 0.32, 0.33, 0.34, 0.35, 0.36, 0.37, 0.38, 0.39 or 0.40 (all values being dimensionless). The fan tip loading may be in an inclusive range bounded by any two of the values in the previous sentence (i.e. the values may form upper or lower bounds), for example in the range of from 0.28 to 0.31, or 0.29 to 0.30.

Turbofan gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 0.4, 0.5, 0.6, 0.7, 0.8, 0.9, 1.0, 1.1, 1.2, 1.3, 1.4, 1.5, 1.6, 1.7, 1.8, 1.9, 2.0, 2.4, 2.8, 3.2, 3.6, or 4.0. The bypass ratio may be in an inclusive range bounded by any two of the values in the previous sentence (i.e. the values may form upper or lower bounds), for example in the range of form of 0.4 to 1.0, 0.5 to 0.9, or 0.6 to 0.9. Alternatively, the bypass ratio may be in a bounded range in the form of 1.0 to 4.0, 1.8 to 3.6, or 2.4 to 3.6. The bypass duct may be substantially annular. The bypass duct may be radially outside the core engine. The radially outer surface of the bypass duct may be defined by a nacelle and/or a fan case.

The overall pressure ratio of a turbofan gas turbine engine as described and/or claimed herein may be defined as the ratio of the stagnation pressure upstream of the fan to the stagnation pressure at the exit of the highest-pressure compressor (before entry into the combustor). By way of non-limitative example, the overall pressure ratio of a gas turbine engine as described and/or claimed herein at cruise may be greater than (or on the order of) any of the following: 10, 15, 20, 25, 30, 35 or 40. The overall pressure ratio may be in an inclusive range bounded by any two of the values in the previous sentence (i.e. the values may form upper or lower bounds), for example in the range of from 20 to 35.

Specific thrust of a turbofan gas turbine engine may be defined as the net thrust of the engine divided by the total mass flow through the engine. At cruise conditions, the specific thrust of an engine as described and/or claimed herein may be less than (or on the order of) any of the following: 800 Nkg⁻¹s, 850 Nkg⁻¹s, 900 Nkg⁻¹s, 950 Nkg⁻¹s, 1000 Nkg⁻¹s, 1050 Nkg⁻¹s, 1100 Nkg⁻¹s, 1150 Nkg⁻¹s, 1200 Nkg⁻¹s, 1250 Nkg⁻¹s, 1300 Nkg⁻¹s, 1350 Nkg⁻¹s, or 1400 Nkg⁻¹s. The specific thrust may be in an inclusive range bounded by any two of the values in the previous sentence (i.e. the values may form upper or lower bounds), for example in the range of from 800 Nkg⁻¹s to 950 Nkg⁻¹s, or 900 Nkg⁻¹s to 1350 Nkg⁻¹s. Such engines may be particularly efficient in comparison with conventional gas turbine engines.

A turbofan gas turbine engine as described and/or claimed herein may have any desired maximum thrust. Purely by way of non-limitative example, a gas turbine as described and/or claimed herein may be capable of producing a maximum thrust of at least (or on the order of) any of the following: 20kN, 40kN, 60kN, 80kN, 100kN, 120kN, 140kN, 160kN, 180kN, or 200kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 60kN to 160kN, for example 70kN to 120kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high-pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1500K, 1550K, 1600K, 1650K, 1700K, 1750K, 1800K, 1850K, 1900K, 1950K, or 2000K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K, 2000K, 2050K, 2100K, 2150K, 2200K, 2250K or 2300K. The maximum TET may be in an inclusive range bounded by any two of the values in the previous sentence (i.e. the values may form upper or lower bounds), for example in the range of from 1800K to 2200K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium-based metal or an aluminium-based material (such as an aluminium-lithium alloy) or a steel-based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The turbofan gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan stage of a turbofan gas turbine engine as described and/or claimed herein may have any desired number of fan blades, for example 12, 14, 16, 18, 20, 22, 24, 26, 28, 30, 32, or 34 fan blades.

As used herein, cruise conditions have the conventional meaning and would be readily understood by the skilled person. In this regard, cruise conditions encompass both subsonic cruise conditions and supersonic cruise conditions. Thus, for a given turbofan gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance - between top of climb and start of descent. Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example, where an engine is designed to be attached to an aircraft that has two engines of the same type, at cruise conditions the engine provides half of the total thrust that would be required for steady state operation of that aircraft at mid-cruise.

In other words, for a given turbofan gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the subsonic cruise condition may be any point in the range of from Mach 0.80 to 0.99, for example 0.80 to 0.85, for example 0.85 to 0.90, for example 0.90 to 0.95, for example 0.95 to 0.99, for example in the region of Mach 0.80, in the region of Mach 0.85 or in the range of from 0.80 to 0.85. Any single speed within these ranges may be part of the cruise condition. For some aircraft, the cruise conditions may be outside these ranges, for example below Mach 0.80.

Purely by way of example, the subsonic cruise conditions may correspond to standard atmospheric conditions (according to the International Standard Atmosphere, ISA) at an altitude that is in the range of from 7000m to 17000m, for example in the range of from 10000m to 16000m, for example in the range of from 11000m to 15000m (around 50000 ft), for example in the range of from 12500m to 15000m, for example in the region of 15000m. The cruise conditions may correspond to standard atmospheric conditions at any given altitude in these ranges.

Purely by way of example, the forward speed at the supersonic cruise condition may be any point in the range of from Mach 1.20 to 2.20, for example 1.35 to 2.10, for example 1.50 to 2.05, for example in the region of Mach 2.00 or in the range of from 1.80 to 2.00. Any single speed within these ranges may be part of the cruise condition. For some aircraft, the cruise conditions may be outside these ranges, for example between Mach 1.0 and 1.20, or above Mach 2.20.

Purely by way of example, the supersonic cruise conditions may correspond to standard atmospheric conditions (according to the International Standard Atmosphere, ISA) at an altitude that is in the range of from 11000m to 19000m, for example in the range of from 12500m to 17000m, for example in the range of from 15000m to 17000m (around 56000 ft), for example in the range of from 16000m to 17000m, for example in the region of 17000m. The cruise conditions may correspond to standard atmospheric conditions at any given altitude in these ranges.

Purely by way of example, the subsonic cruise conditions may correspond to an operating point of the engine that provides a known required thrust level (for example a value in the range of from 40kN to 65kN) at a forward Mach number of 0.8 and standard atmospheric conditions (according to the International Standard Atmosphere) at an altitude of 38000ft (11582m). Purely by way of further example, the supersonic cruise conditions may correspond to an operating point of the engine that provides a known required thrust level (for example a value in the range of from 70kN to 120kN) at a forward Mach number of 1.50 and standard atmospheric conditions (according to the International Standard Atmosphere) at an altitude of 56000ft (17000m).

In use, a turbofan gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect of the disclosure, there is provided an aircraft comprising a turbofan gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect of the disclosure, there is provided a method of operating a turbofan gas turbine engine as described and/or claimed herein. The operation may be at the cruise conditions as defined elsewhere herein (for example in terms of the thrust, atmospheric conditions and Mach Number).

According to an aspect of the disclosure, there is provided a method of operating an aircraft comprising a turbofan gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:

Figure 1 shows a schematic part-sectional view of a turbofan gas turbine engine according to the prior art;
Figure 2 shows a schematic sectional view of a turbofan gas turbine engine according to a first embodiment of the disclosure;
Figure 3 shows a schematic sectional view of a turbofan gas turbine engine according to a second embodiment of the disclosure;
Figure 4 shows a schematic sectional view of a turbofan gas turbine engine according to a third embodiment of the disclosure;
Figure 5 shows a schematic perspective view of an aircraft according to a further embodiment of the disclosure; and
Figure 6 shows the relationship between electrical power generated by the electric machine(s) and electrical energy storage capability for the gas turbine engine of any of Figures 2 to 4.

It is noted that the drawings may not be to scale. The drawings are intended to depict only typical aspects of the disclosure, and therefore should not be considered as limiting the scope of the disclosure. In the drawings, like numbering represents like elements between the drawings.

*Detailed Description*

An axial direction is defined as being in the direction of the axis of rotation of the gas turbine engine. A lateral direction is defined as being perpendicular to the axis of rotation of the gas turbine engine and as extending in the direction of the left and right sides of the gas turbine engine. A vertical direction is defined as being perpendicular to the axis of rotation of the gas turbine engine and also perpendicular to the lateral direction of the gas turbine engine.

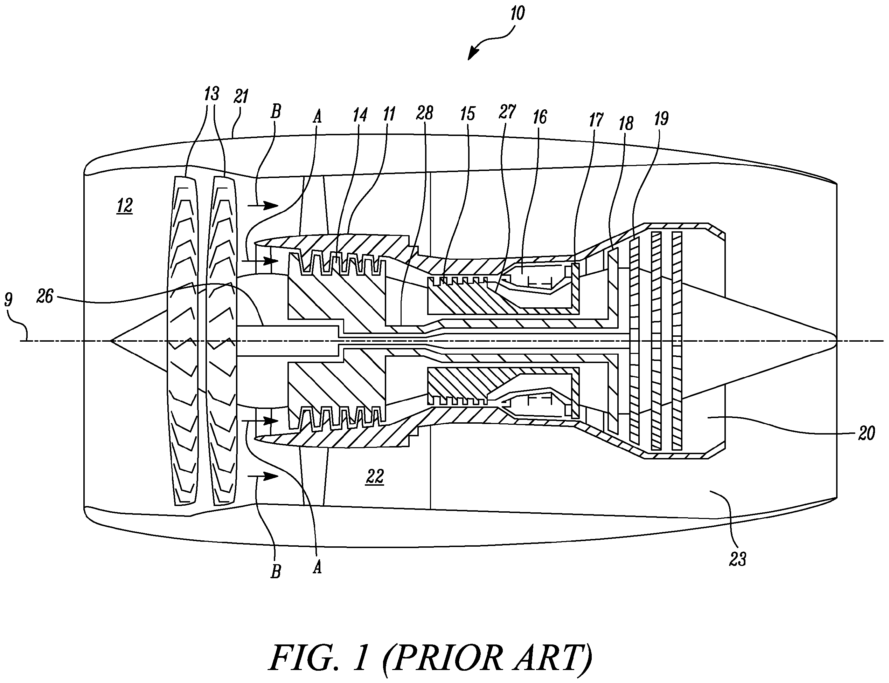

Figure 1 illustrates a conventional turbofan gas turbine engine 10 having a principal rotational axis 9. The engine 10 comprises an air intake 12 and a two-stage propulsive fan 13 that generates two airflows: a core airflow A and a bypass airflow B. The gas turbine engine 10 comprises a core 11 that receives the core airflow A. The engine core 11 comprises, in axial flow series, a low-pressure compressor 14, a high-pressure compressor 15, combustion equipment 16, a high-pressure turbine 17, an intermediate-pressure turbine 18, a low-pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 13 is attached to and driven by the low-pressure turbine 19 via a shaft 26.

In use, the core airflow A is accelerated and compressed by the low-pressure compressor 14 and directed into the high-pressure compressor 15 where further compression takes place. The compressed air exhausted from the high-pressure compressor 15 is directed into the combustion equipment 16 where it is mixed with fuel and the mixture is combusted. The resultant hot combustion products then expand through, and thereby drive, the high-pressure, intermediate-pressure, and low-pressure turbines 17, 18, 19 before being exhausted through the nozzle 20 to provide some propulsive thrust. The high-pressure turbine 17 drives the high-pressure compressor 15 by a suitable interconnecting shaft 27. The low-pressure compressor 14 drives the intermediate-pressure turbine 18 via a shaft 28.

Note that the terms "low-pressure turbine" and "low-pressure compressor" as used herein may be taken to mean the lowest pressure turbine stages and lowest pressure compressor stages (i.e. not including the fan 13) respectively and/or the turbine and compressor stages that are connected together by the interconnecting shaft 26 with the lowest rotational speed in the engine. In some literature, the "low-pressure turbine" and "low-pressure compressor" referred to herein may alternatively be known as the "intermediate-pressure turbine" and "intermediate-pressure compressor". Where such alternative nomenclature is used, the fan 13 may be referred to as a first, or lowest pressure, compression stage.

Other turbofan gas turbine engines to which the present disclosure may be applied may have alternative configurations. For example, such engines may have an alternative number of fans and/or compressors and/or turbines and/or an alternative number of interconnecting shafts. By way of further example, the gas turbine engine shown in Figure 1 has a split flow nozzle 20, 23 meaning that the flow through the bypass duct 22 has its own nozzle 23 that is separate to and radially outside the core engine nozzle 20. However, this is not limiting, and any aspect of the present disclosure may also apply to engines in which the flow through the bypass duct 22 and the flow through the core engine 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

The geometry of the turbofan gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

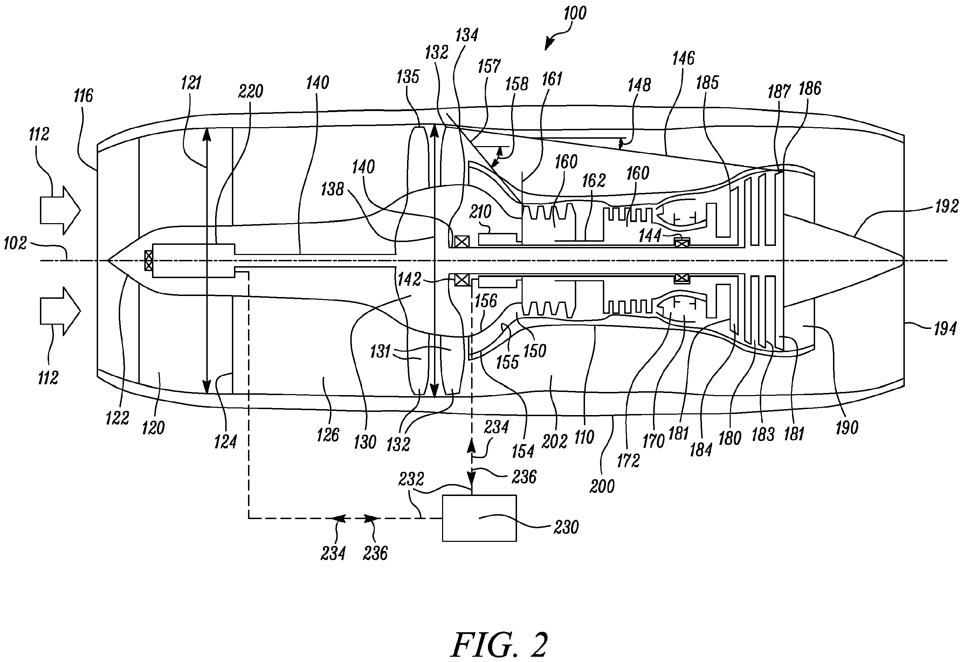

Referring to Figure 2, a turbofan gas turbine engine according to a first embodiment of the disclosure is designated generally by the reference numeral 100. The turbofan gas turbine engine 100 comprises in axial flow sequence, a heat exchanger module 120, a fan assembly 130, a compressor module 160, a combustor module 170, a turbine module 180, and an exhaust module 190. The gas turbine engine 100 has an axial length L 104 between an inlet face 116 of the engine 100 to an exhaust face 194 of the engine.

The gas turbine engine 100 has a longitudinal axis 102 being the rotational axis 102 of the compressor and turbine assemblies 160, 180. The gas turbine engine 100 has a first side 105 and a second side 106 defined as opposing sides of the rotational axis 102 in a direction extending from an exhaust face 194 of the gas turbine engine 100 to an inlet face 116 of the gas turbine engine 100. The first side 105 is the left side of the engine 100 in a direction from the exhaust face 194 to the inlet face 116. Likewise the second side 106 is the right side of the engine 100 in a direction from the exhaust face 194 to the inlet face 116.

An axial direction is defined as being in the direction of the axis of rotation 102 of the gas turbine engine 100. Axial constraint 264 is provided in the axial direction. A lateral direction is defined as being perpendicular to the axis of rotation 102 of the gas turbine engine 100 and as extending in the direction of the left and right sides 105,106 of the gas turbine engine 100. Lateral constraint 262 is provided in the lateral direction. A vertical direction is defined as being perpendicular to the axis of rotation 102 of the gas turbine engine 100 and also perpendicular to the lateral direction of the gas turbine engine 100. Vertical constraint 260 is provided in the vertical direction.

The fan assembly 130 (also termed a low-pressure compressor) is rotationally connected to the low-pressure turbine 181 by an LP shaft 140. The compressor assembly 160 is rotationally connected to the high-pressure turbine 183 by an HP shaft 162.

In the present arrangement, the fan assembly 130 comprises two fan stages 131, with each fan stage 131 comprising a plurality of fan blades 132. In the present arrangement each fan stage 131 has the same fan diameter 138, with the respective plurality of fan blades defining a fan diameter of 0.9m. Each fan blade 132 has a leading edge 133 and a corresponding trailing edge 134. The fan assembly 130 comprises, in axial flow sequence, a lowest pressure fan stage and a highest pressure fan stage.

In an alternative arrangement, the two fan stages 131 may have different fan diameters 136 each defined by the corresponding plurality of fan blades 132. As previously mentioned, the fan diameter ($D_{FAN}$) 136 is defined by a circle circumscribed by the leading edges of the respective plurality of fan blades 132.

The turbine module 180 comprises, in axial flow sequence, a low-pressure turbine 181 and a high-pressure turbine 183. Each of the low pressure turbine 181 and high pressure turbine 183 has a turbine stage comprising a row of turbine blades 184, with each of the turbine blades 184 extending radially outwardly and having a leading edge 185 and a corresponding trailing edge 186.

A fan tip axis 146 is defined as extending from a radially outer tip 135 of the leading edge 133 of one of the plurality of fan blades 132 of the highest pressure fan stage 131, to a radially outer tip 187 of the trailing edge 186 of one of the turbine blades 184 of the lowest pressure turbine stage 181. The fan tip axis 146 extends in a longitudinal plane which contains a centreline of the gas turbine engine 102, and a fan axis angle 148 is defined as the angle between the fan tip axis 146 and the centreline 102. In the present embodiment, the fan axis angle has a value of 18 degrees.

The heat exchanger module 120 comprises a plurality of heat transfer elements 124 extending radially outwardly from a central hub 122. The heat exchanger module 120 is in fluid communication with the fan assembly 130 by an inlet duct 126. The heat exchange module 120 has an axial length of 0.4m, this being 0.4 times the fan diameter of 0.9m.

The inlet duct 126 extends between a downstream-most face of the heat transfer elements and an upstream-most face of the fan assembly. In the present arrangement, the inlet duct 126 is linear. However, in other arrangements the inlet duct 126 may be curved or convoluted.

The inlet duct 126 has a fluid path length of 3.6m, this being 4.0 times the fan diameter of 0.9m. The fluid path length extends along a central axis 102 of the inlet duct 126.

The heat exchanger module 120 has a flow area ($A_{HEX}$). The heat exchanger module flow area is the cross-sectional area of the heat exchanger module 120 through which an air flow 112 passes before being ingested by the fan assembly 130. In the present arrangement, the heat exchanger module flow area has an annular cross-section and corresponds directly to the shape of the air flow passing through the heat exchanger module 120.

The fan assembly 130 has a corresponding flow area ($A_{FAN}$). The fan assembly flow area is the cross-sectional area of the fan assembly 130 through which an air flow 112 passes before separating into a core engine flow and a bypass flow. The fan assembly flow area has an annular shape since it corresponds to the annular area swept by the fan blades 132.

The fan assembly 130 is fluidly connected to the compressor module 160 by an intermediate duct 150. The intermediate duct 150 directs a proportion of the inlet air flow 112 into the core engine 110. The intermediate duct 150 extends axially rearwards and radially inwards.

In the present arrangement, the heat exchanger module flow area is equal to the fan assembly flow area, and the corresponding ratio of $A_{HEX}/A_{FAN}$ is equal to 1.0.

The heat exchanger module 120 has a flow diameter (E) 121, which is the diameter of the air flow passing through the heat exchanger module 120. In the present arrangement, the heat exchanger module flow diameter 121 is equal to the fan diameter 136.

The heat exchanger module 120 comprises a plurality of heat transfer elements 124 for the transfer of heat energy from a first fluid 275 contained within the heat transfer elements 124 to an airflow 112 passing over a surface of the heat transfer elements 124 prior to entry of the airflow 112 into the fan assembly 130. In the present embodiment, the first fluid 275 is a mineral oil. In other arrangements, the first fluid 275 may be an alternative heat transfer fluid such as, for example, a water-based fluid, or the fuel used by the turbofan gas turbine engine.

The heat transfer elements 124 have a conventional tube and fin construction and will not be described further. In an alternative arrangement, the heat transfer elements 124 may have a different construction such as, for example, plate and shell.

The turbofan gas turbine engine 100 further comprises an outer housing 200. The outer housing 200 fully encloses the sequential arrangement of the heat exchanger module 120, inlet duct 126, fan assembly 130, compressor module 160, combustor module 170, and turbine module 180. The outer housing 200 defines a bypass duct 202 between the outer housing 200 and the core engine components (comprising *inter alia* the compressor module 160 and the turbine module 180). In the present arrangement, the bypass duct 202 has a generally axi-symmetrical annular cross-section extending over the core engine components. In other arrangements, the bypass duct 202 may have a non-symmetric annular cross-section or may not extend around a complete circumference of the core engine components.

A first electric machine 210 is rotationally connected to the HP shaft 162 axially upstream of the compressor assembly 160. The first electric machine 210 does not extend axially beyond an inlet plane 161 of the compressor module 160. The first electric machine 210 has an axial length 212 $L_{EM}$ and a diameter 214 $D_{EM}$. A ratio of the axial length 212 to the diameter 214 ($L_{EM} / D_{EM}$) for the first electric machine 210 is 1.2.

The first electric machine 210 may operate as an electric motor and rotationally drive the HP shaft 162. Alternatively, the first electric machine 210 may operate as an electric generator, in which arrangement it is rotationally driven by the HP shaft 162.

The first electric machine 210 is electrically connected to an electrical energy storage unit 230 by an electrical connection 232. In the present arrangement, the electrical energy storage unit 230 takes the form of a battery pack 230. The battery pack 230 has an electrical energy storage capacity of 20kWh. In the present arrangement, the battery pack 230 is formed from lithium manganese oxide cells. In alternative arrangements the battery pack 230 may be formed with, for example, an alternative lithium ion architecture or other energy storage architecture.

When the first electric machine 210 is operating as an electric generator, electrical energy is routed via the electrical connection 232 to the electrical energy storage unit 230. Likewise, electrical energy may be directed from the electrical energy storage unit 230 to the first electric machine 210 when the first electric machine is operating as an electric motor.

A second electric machine 220 is positioned upstream of the fan assembly 130 and accommodated within the central hub 122 of the heat exchanger module 120. The second electric machine 220 is rotationally connected to the fan assembly 130. As outlined above for the first electric machine 210, the second electric machine 220 is electrically connected to the electrical energy storage unit 230 by an electrical connection 232. Likewise, the second electric machine 20 may be operated as an electric generator with electrical energy 236 routed to the electrical energy storage unit 230 via the electrical connection 232. Alternatively, the second electric machine 220 may be operated as an electric motor with electrical energy 234 routed from the electrical energy storage unit 230 via the electrical connection 232.

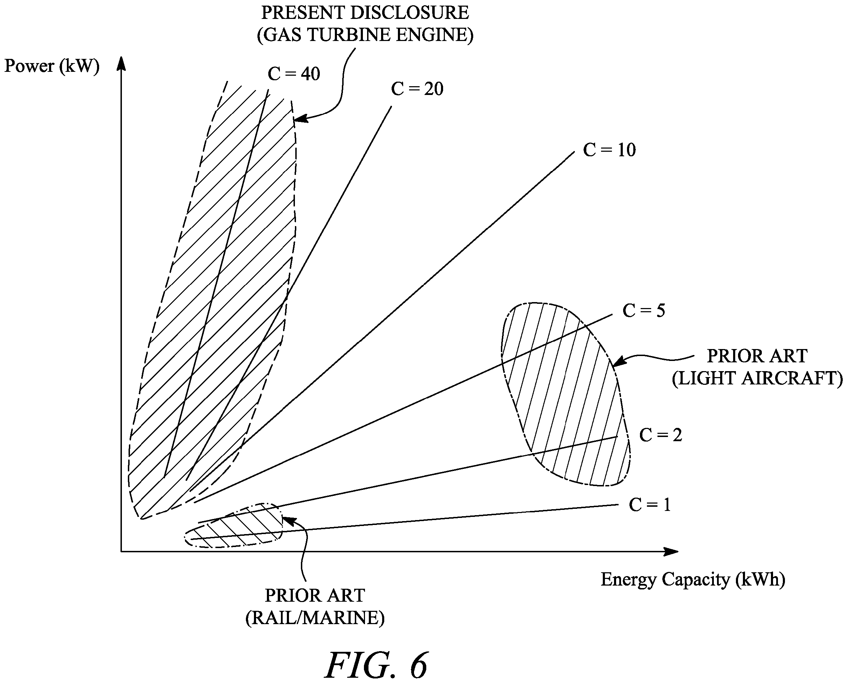

In the arrangement of Figure 2, the energy storage unit 230 has a maximum charge rate of 25 ($h^{-1}$). The energy storage unit 230 also has a maximum discharge rate of 35 ($h^{-1}$). Figure 6 shows a schematic relationship between the electrical power supplied by either or both of the first electric machine 210 and the second electric machine 220 to the electrical energy storage unit 230 during a charging cycle, and the electrical energy storage capacity of the electrical energy storage unit 230 for a range of maximum charge rates C.

As shown in Figure 6 the gas turbine engine 100 of the present invention is capable of transferring electrical energy from either or both of the first electric machine 210 and the second electric machine 220, to the electrical energy storage unit 230 at a considerably higher charging rate than prior art arrangements. In other words, the gas turbine engine 100 of the present invention is capable of recharging the electrical energy storage unit 230 at a considerably higher charging rate than prior art arrangements.

A similar relationship (not illustrated) exists between the electrical power supplied by the electrical energy storage unit 230 during a discharging cycle and the electrical energy storage capacity of the electrical energy storage unit 230 for a range of maximum discharge rates D. In this configuration, the electrical power supplied by the electrical energy storage unit 230 may be directed to either or both of the first electric machine 210 and the second electric machine 220, to an airframe function such as an aerodynamic control surface movement actuator, or alternatively to an ancillary system such as, for example, an atmospheric sensing apparatus.

The HP shaft 162 is supported on a first bearing assembly 142 and second bearing assembly 144. The first bearing assembly 142 is positioned axially between the fan assembly 130 and the first electric machine 210. In the present arrangement, the lowest-pressure fan stage 131 extends axially partially over the first bearing assembly 142.

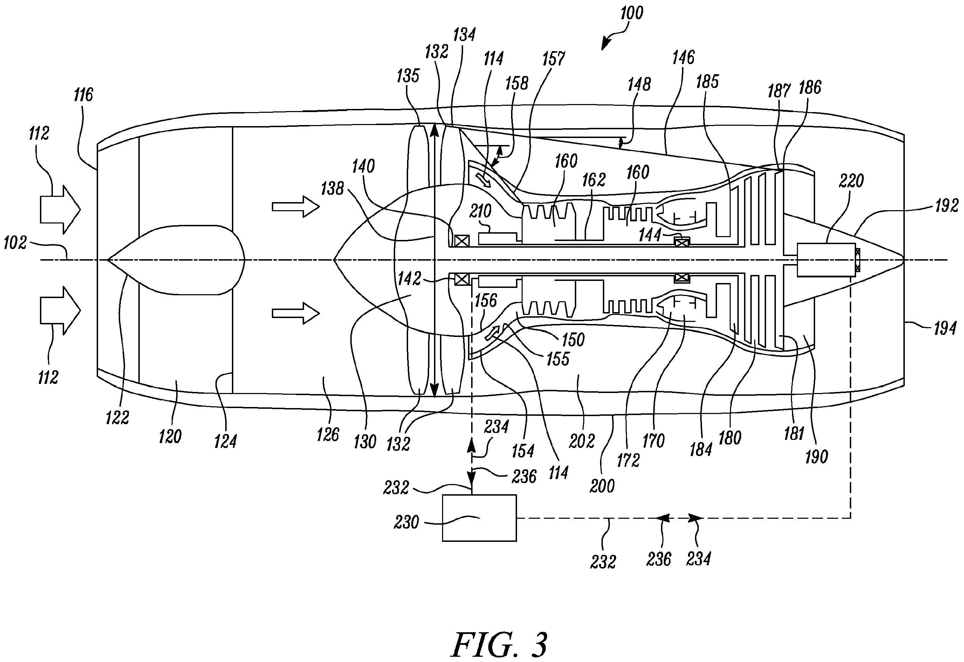

Figure 3 shows a turbofan gas turbine engine according to a second embodiment of the disclosure. The gas turbine engine of Figure 3 broadly corresponds to that of the first embodiment shown in Figure 2 and described above.

However, in the arrangement of Figure 3, the second electric machine 220 is positioned in a tail cone 192 of the core engine 110. As described above, the second electric machine 220 is rotationally connected to the LP shaft 140, connecting the fan assembly 130 to the turbine module 180.

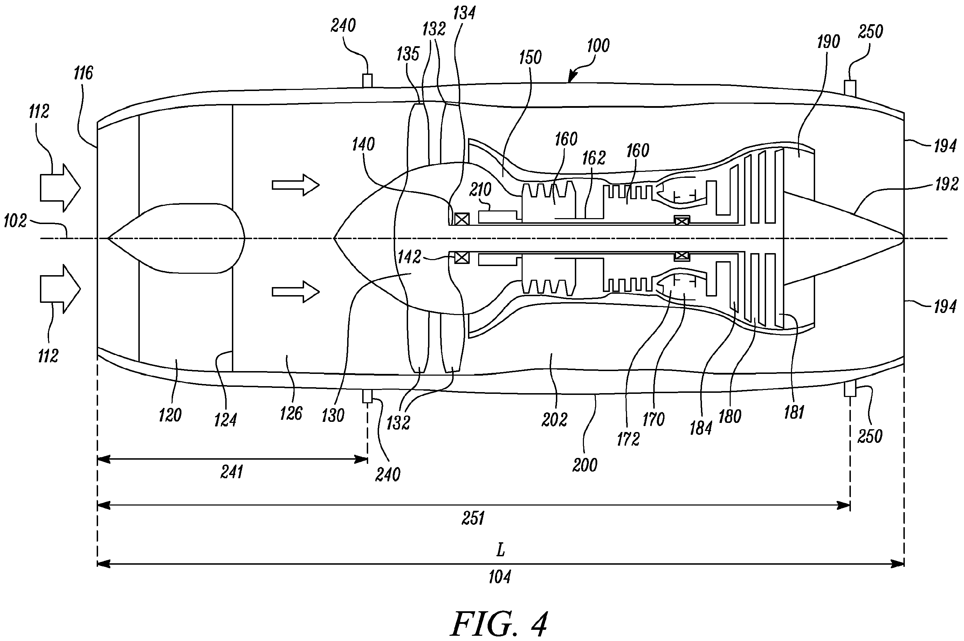

Figure 4 a turbofan gas turbine engine according to a third embodiment of the disclosure. The embodiment of Figure 4 differs from the earlier embodiments of Figures 2 and 3 in that the gas turbine engine of Figure 4 comprises only a first electric machine 210, and not the first and second electric machines 210,220 forming part of the Figure 2 and 3 arrangements.

The embodiment of Figure 4 is therefore simpler than those of Figures 2 and 3, while retaining the advantages of an embedded electric machine of power generation, core engine working line optimisation, and autonomous ground and in-flight starting.

shows a further view of the embodiment of Figure 3 with the addition of the first engine mount plane 240 and the second engine mount plane 250. The first engine mount plane 240 is positioned at a distance of 0.3*L from the inlet face 116 of the engine 100.

The second engine mount plane 250 is positioned at a distance of 0.9*L from the inlet face 116 of the engine 100.

The intermediate duct 150 extends between the fan assembly 130 and the compressor module 160. An intermediate flow axis 157 is defined extending from a radially outer tip 135 of a trailing edge 134 of one of the plurality of fan blades 132 of the highest pressure fan stage 131, to a radially outer tip 167 of a leading edge 165 of one of the plurality of compressor blades 164 of the lowest-pressure compressor stage 163. The intermediate flow axis 157 lies in a longitudinal plane containing the centreline of the gas turbine engine 102. An intermediate flow axis angle 158 is defined as the angle between the intermediate flow axis 157 and the centreline 102.

The intermediate flow axis angle 158 has a value of -30 degrees. In other words, in the direction extending from the inlet face 116 of the turbofan engine 100 to the exhaust face 194 of the turbofan engine, the intermediate flow axis angle 158is inclined in a radially inwardly direction.

The intermediate duct 150 comprises a radially outer wall 154 and an opposite radially inner wall156. A radially inwardly facing surface 155 of the radially outer wall 154 has an outer intermediate duct wall angle 153 of -30 degrees. The intermediate duct 150 may have a partially serpentine geometry. In such an instance, for example where the intermediate duct 150 is not linear, the outer intermediate duct wall angle 153 is defined as the corresponding angle of a tangent to the radially inwardly facing surface 155 of the radially outer wall 154 at a mid-point along the intermediate duct 150.

In this arrangement, the highest-pressure fan stage 131 extends axially completely over the first bearing assembly 142. In other words, the first bearing assembly 142 is axially enclosed by the fan assembly 130.

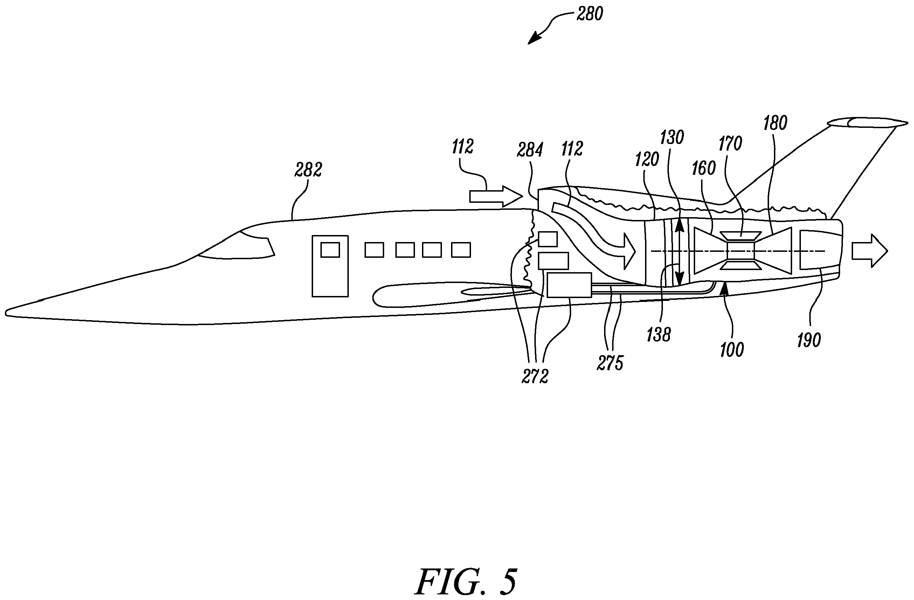

Referring to Figure 5, an aircraft according to an embodiment of the disclosure is designated by the reference numeral 280. The aircraft 280 comprises a machine body 282 in the form of a fuselage with wings and a tail plane. The machine body 282 encloses a turbofan gas turbine engine 100, together with a plurality of ancillary apparatus 274.

When operating at a full power condition, the gas turbine engine 100 of any of the described embodiments will have a corrected core engine mass flow rate of approximately 20 kg/sec. The term Corrected Mass Flow Rate is the mass flow rate that would pass through the core engine 110 if the inlet pressure and temperature corresponded to ambient conditions at Sea Level Static (SLS) for the International Standard Atmosphere (ISA). These pressure and temperature conditions are 1,013.25 mb (29.92 in) and 15°C (59°F).

In one arrangement of the turbofan gas turbine engine 100, for example that shown in Figure 4, the engine provides a maximum dry thrust at SLS[2] conditions of 50kN. It is known from experimental testing that this arrangement of the gas turbine engine produces approximately 10MW of shaft power from the low-pressure shaft, and approximately 12.5MWfrom the high-pressure shaft; i.e. a total maximum shaft power output of 22.5MW. These shaft power figures correspond to operation of the gas turbine engine at a full-power condition at Sea Level Static (SLS) conditions and in an International Standard Atmosphere (15°C / 1,013.25 mb).

The first electric machine 210, when configured as a generator can produce a maximum electrical power output of 300kW. Consequently, a ratio R of:

$$R = \frac{(\text{Maximum Electrical Power Generated} = \mathrm{P}_{EM1})}{(\text{Maximum Shaft Power} = P_{SHAFT})}$$

has a value of 0.013.

In this arrangement the electrical energy storage unit 230 has an electrical energy storage capacity E of 20 kWh. Consequently, the ratio L of:

$$L = \frac{(\text{Energy storage capacity}) * (\text{Maximum electrical power generated})}{(\text{Maximum Dry Thrust})}$$

has a value of 120,000.

[2] In the present example, the SLS (Sea Level Static) conditions are considered to also be at ISA Standard Atmosphere conditions (1,013.25 mb / 15°C).

Furthermore, the electrical energy storage unit 230 has a maximum charge rate C of 25 $h^{-1}$ and a maximum discharge rate D of 35 $h^{-1}$. This in turn results in the ratio M of:

$$M = \frac{(\text{Maximum charge rate}) * (\text{Maximum electrical power generated})}{(\text{Maximum Dry Thrust})}$$

taking a value of 150, while the ratio N of:

$$N = \frac{(\text{Maximum Discharge Rate}) * (\text{Maximum electrical power generated})}{(\text{Maximum Dry Thrust})}$$

has a value of 210.

Taking the example of the alternative arrangement of the turbofan gas turbine engine 100 of, say, Figure 2, having both a first electric machine 210 and a second electric machine 220, again with both electric machines 210,220 configured as electric generators, the maximum electrical power output is approximately 500kW. In this arrangement, the gas turbine engine provides a maximum dry thrust at SLS[3] conditions of 50kN. In this alternative arrangement, the ratio R takes a value of 0.022.

In this alternative arrangement having both first electric machine 210 and second electric machine 220, the electrical energy storage unit 230 has an electrical energy storage capacity E of 20 kWh. Consequently, the ratio L of:

$$L = \frac{(\text{Energy storage capacity}) * (\text{Maximum electrical power generated})}{(\text{Maximum Dry Thrust})}$$

has a value of 200,000.

Furthermore, in this alternative arrangement, the electrical energy storage unit 230 has a maximum charge rate C of 25 $h^{-1}$ and a maximum discharge rate D of 35 $h^{-1}$. This in turn results in the ratio M of:

[3] In the present example, the SLS (Sea Level Static) conditions are considered to also be at ISA Standard Atmosphere conditions (1,013.25 mb / 15°C).

$$M = \frac{(\text{Maximum charge rate}) * (\text{Maximum electrical power generated})}{(\text{Maximum Dry Thrust})}$$

taking a value of 150, while the ratio N of:

$$N = \frac{(\text{Maximum Discharge Rate}) * (\text{Maximum electrical power generated})}{(\text{Maximum Dry Thrust})}$$

has a value of 350.

In the present example, at the full power engine condition, the maximum electrical power output (500kW) from an engine arrangement having both a first electric machine 210 and a second electric machine 220 as a proportion of the total maximum shaft power is approximately 2.2%[4].

In an alternative operating condition of the turbofan gas turbine engine 100, the engine may be installed in an aircraft that in a cruise condition, such as an airspeed of, for example, Mn0.6, generates approximately 5MW of total shaft power (i.e. sum of the low pressure shaft power and the high pressure shaft power). In such an operating condition, the maximum electrical power output (500kW) from an engine arrangement having both a first electric machine 210 and a second electric machine 220 as a proportion of the total maximum shaft power is approximately 10.0%[5]. It is clear that in such an alternative operating condition, the total electrical generating capacity of the turbofan gas turbine engine 100 is a significantly higher proportion of the engine' power output than in the case for turbofan gas turbine engines.

The heat exchanger module 120 is configured to dissipate a total waste heat energy to the inlet air flow 112 of approximately 300kW. A measure of the capability of the gas turbine engine to dissipate heat energy for a given electrical power generation capacity is provided by the ratio S of:

$$S = \frac{(\text{Maximum Electrical Power Generated} = P_{EM1})}{(\text{Total Heat Energy Rejected to Airflow} = Q)}$$

having a value of 1.00.

[4] (500,000/22,500,000)=0.022
[5] (500,000/5,000,000)=0.10

In the alternative arrangement of, say, Figure 2 in which the turbofan gas turbine engine 100 has both a first electric machine 210 and a second electric machine 220, the ratio S takes a value of 1.67.

Note that the terms "low-pressure turbine" and "low-pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine. In some literature, the "low-pressure turbine" and "low-pressure compressor" referred to herein may alternatively be known as the "intermediate-pressure turbine" and "intermediate-pressure compressor". Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. Whilst the described example relates to a turbofan engine, the disclosure may apply, for example, to any type of gas turbine engine, such as an open rotor (in which the fan stage is not surrounded by a nacelle) or turboprop engine, for example.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

The invention includes methods that may be performed using the subject devices. The methods may comprise the act of providing such a suitable device. Such provision may be performed by the end user. In other words, the "providing" act merely requires the end user obtain, access, approach, position, set-up, activate, power-up or otherwise act to provide the requisite device in the subject method. Methods recited herein may be carried out in any order of the recited events which is logically possible, as well as in the recited order of events.

In addition, where a range of values is provided, it is understood that every intervening value, between the upper and lower limit of that range and any other stated or intervening value in that stated range, is encompassed within the invention.

Except where mutually exclusive, any of the features may be employed separately or in combination with any other features and the disclosure extends to and includes all combinations and sub-combinations of one or more features described herein.

## Claims

1. A gas turbine engine for an aircraft, the gas turbine engine comprising, in axial flow sequence, a compressor module, a combustor module, and a turbine module, the gas turbine engine further comprising a first electric machine being rotationally connected to the turbine module, and an electrical energy storage unit, and wherein the gas turbine engine is configured to generate a maximum dry thrust T (N), the first electric machine is configured to generate a maximum electrical power $P_{EM1}$ (W), the electrical energy storage unit has an energy storage capacity E (Wh), the electrical energy storage unit has a maximum charge rate C ($h^{-1}$), the electrical energy storage unit has a maximum discharge rate D ($h^{-1}$), and the electrical energy storage unit is configured to store electrical energy that may be generated by the first electrical machine.

2. The gas turbine engine as claimed in Claim 1, wherein the maximum electrical power is the maximum power output of the first electric machine, $P_{EM1}$, and a ratio L is defined as:

$$L = \frac{(\text{Energy storage capacity}) * (\text{Maximum electrical power generated})}{(\text{Maximum Dry Thrust})}$$

where L is in a range of between 20,000 and 300,000.

3. The gas turbine engine as claimed in Claim 1 or Claim 2, wherein the maximum electrical power is the maximum power output of the first electric machine, $P_{EM1}$, and a ratio M is defined as:

$$M = \frac{(\text{Maximum charge rate}) * (\text{Maximum electrical power generated})}{(\text{Maximum Dry Thrust})}$$

where M is in a range of between 20 and 400.

4. The gas turbine engine as claimed in any one of Claims 1 to 3, wherein the maximum electrical power is the maximum power output of the first electric machine, $P_{EM1}$, and a ratio N is defined as:

$$N = \frac{(\text{Maximum Discharge Rate}) * (\text{Maximum electrical power generated})}{(\text{Maximum Dry Thrust})}$$

where N is in a range of between 40 and 400.

5. The gas turbine engine as claimed in any one of Claims 1 to 4, wherein the gas turbine engine is a turbofan engine comprising, in axial flow sequence, a fan assembly, a compressor module, a combustor module, and a turbine module.

6. The gas turbine engine as claimed in Claim 5, the gas turbine engine further comprises a second electric machine rotationally connected to the fan assembly, the second electric machine being configured to generate a maximum electrical power $P_{EM2}$ (W).

7. The gas turbine engine as claimed in Claim 6, wherein the maximum electrical power is the combined maximum power output of the first electric machine, $P_{EM1}$, and the second electric machine, $P_{EM2}$, and the ratio L is in a range of between 30,000 and 600,000.

8. The gas turbine engine as claimed in Claim 6 or Claim 7, wherein the maximum electrical power is the combined maximum power output of the first electric machine, $P_{EM1}$, and the second electric machine, $P_{EM2}$, and the ratio M is in a range of between 30 and 800.

9. The gas turbine engine as claimed in any one of Claims 6 to 8, wherein the maximum electrical power is the combined maximum power output of the first electric machine, $P_{EM1}$, and the second electric machine, $P_{EM2}$, and the ratio N is in a range of between 70 and 800.

10. The gas turbine engine as claimed in any one of Claims 2 to 9, wherein the fan diameter $D_{FAN}$ is within a range of between 0.3m and 2.0m, preferably within a range of between 0.4m and 1.5m, and more preferably in a range of between 0.7m and 1.0m.

**11.** The gas turbine engine as claimed in Claim 10, wherein the fan assembly has two or more fan stages, at least one of the fan stages comprising a plurality of fan blades defining the fan diameter $D_{FAN}$.

**12.** The gas turbine engine as claimed in any one of Claims 2 to 11, wherein the turbofan gas turbine engine further comprises an outer casing, the outer casing enclosing the sequential arrangement of fan assembly, compressor module, and turbine module, an annular bypass duct being defined between the outer casing and the sequential arrangement of compressor module and turbine module, a bypass ratio being defined as a ratio of a mass air flow rate through the bypass duct to a mass air flow rate through the sequential arrangement of compressor module and turbine module, and wherein the bypass ratio is less than 4.0.

**13.** The gas turbine engine as claimed in any one of Claims 1 to 12, the gas turbine engine further comprising a heat exchanger module, the heat exchanger module being in fluid communication with the gas turbine engine by an inlet duct, and the heat exchanger module comprising a central hub and a plurality of heat transfer elements extending radially outwardly from the central hub and spaced in a circumferential array, for transfer of heat energy from a first fluid contained within the heat transfer elements to an inlet airflow passing over a surface of the heat transfer elements prior to entry of the airflow into an inlet to the gas turbine engine.

**14.** A method of operating a gas turbine engine for an aircraft, the method comprising the steps of:

(i) providing a gas turbine engine, the gas turbine engine comprising, in axial flow sequence, a compressor module, a combustor module, and a turbine module;
(ii) providing a first electric machine rotationally connected to the turbine module;
(iii) providing an electrical energy storage unit, the electrical energy storage unit being configured to store electrical energy that is generated by the first electric machine, the electrical energy storage unit has an energy storge capacity E (Wh), the electrical energy storage unit has a maximum charge rate C ($h^{-1}$), the electrical energy storage unit has a maximum discharge rate D ($h^{-1}$); and
(iv) operating the gas turbine engine at a full power condition in which the gas turbine engine generates a maximum dry thrust T (N), the first electric machine generates a maximum electrical power $P_{EM1}$ (W), and wherein a ratio L of:

$$L = \frac{(\text{Energy storage capacity}) * (\text{Maximum electrical power generated})}{(\text{Maximum Dry Thrust})}$$

is in a range of between 20,000 and 300,000.

**15.** The method of operating a gas turbine engine as claimed in Claim 14, wherein step (iv) comprises the step of:
(iv)" operating the gas turbine engine at a full power condition in which the gas turbine engine generates a maximum dry thrust T (N), the first electric machine generates a maximum electrical power $P_{EM1}$ (W), and wherein a ratio M of:

$$M = \frac{(\text{Maximum charge rate}) * (\text{Maximum electrical power generated})}{(\text{Maximum Dry Thrust})}$$

is in a range of between 20 and 400.

**16.** The method of operating a gas turbine engine as claimed in Claim 14 wherein step (iv) comprises the step of:
(iv)''' operating the gas turbine engine at a full power condition in which the gas turbine engine generates a maximum dry thrust T (N), the first electric machine generates a maximum electrical power $P_{EM1}$ (W), and wherein a ratio N of:

$$N = \frac{(\text{Maximum Discharge Rate}) * (\text{Maximum electrical power generated})}{(\text{Maximum Dry Thrust})}$$

is in a range of between 40 and 400.

FIG. 1 (PRIOR ART)

**FIG. 2**

EP 4 148 265 A1

*FIG. 3*

EP 4 148 265 A1

*FIG. 4*

FIG. 5

*FIG. 6*

Europäisches
Patentamt

European
Patent Office

Office européen
des brevets

# EUROPEAN SEARCH REPORT

Application Number

EP 22 19 2760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/392924 A1 (TURNER CAROLINE L [GB]) 17 December 2020 (2020-12-17) * paragraphs [0047], [0048], [0066], [0080], [0081], [0085], [0160], [0170], [0172], [0199] * * figures 1-3 * | 1-16 | INV. F02K5/00 F02K3/06 F02C6/14 B64D27/24 |
| X | US 2020/017225 A1 (CHUNG JAE-HOON [GB] ET AL) 16 January 2020 (2020-01-16) * paragraph [0013] * * paragraph [0026] - paragraph [0041] * | 1-5,10, 11,14-16 | |
| X | US 2018/354631 A1 (ADIBHATLA SRIDHAR [US] ET AL) 13 December 2018 (2018-12-13) * figures 2,4,6,7 * * paragraphs [0044], [0054], [0064], [0075] - [0078] * | 1-5, 14-16 | |
| X | EP 3 428 068 A1 (GEN ELECTRIC [US]) 16 January 2019 (2019-01-16) * paragraph [0058] - paragraph [0071]; figure 4 * | 1,14 | TECHNICAL FIELDS SEARCHED (IPC) |
| A | US 2021/270148 A1 (MARCHAJ IAN T [US]) 2 September 2021 (2021-09-02) * paragraph [0043] - paragraph [0049]; figures 3,4,5 * | 13 | F02C F01D B64D F02K |

The present search report has been drawn up for all claims

| Place of search | Date of completion of the search | Examiner |
|---|---|---|
| The Hague | 1 February 2023 | Herbiet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 22 19 2760

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2023

| Patent document cited in search report | | Publication date | Patent family member(s) | | Publication date |
|---|---|---|---|---|---|
| US 2020392924 | A1 | 17-12-2020 | GB | 2584697 A | 16-12-2020 |
| | | | US | 2020392924 A1 | 17-12-2020 |
| US 2020017225 | A1 | 16-01-2020 | CN | 110697056 A | 17-01-2020 |
| | | | EP | 3594125 A1 | 15-01-2020 |
| | | | US | 2020017225 A1 | 16-01-2020 |
| US 2018354631 | A1 | 13-12-2018 | CA | 3006123 A1 | 08-12-2018 |
| | | | CN | 109018380 A | 18-12-2018 |
| | | | EP | 3412575 A1 | 12-12-2018 |
| | | | JP | 6866328 B2 | 28-04-2021 |
| | | | JP | 2019031271 A | 28-02-2019 |
| | | | US | 2018354631 A1 | 13-12-2018 |
| EP 3428068 | A1 | 16-01-2019 | CA | 3009823 A1 | 11-01-2019 |
| | | | CN | 109229395 A | 18-01-2019 |
| | | | EP | 3428068 A1 | 16-01-2019 |
| | | | US | 10006375 B1 | 26-06-2018 |
| US 2021270148 | A1 | 02-09-2021 | EP | 3872324 A1 | 01-09-2021 |
| | | | US | 2021270148 A1 | 02-09-2021 |

EPO FORM P0459

For more details about this annex : see Official Journal of the European Patent Office, No. 12/82